(19) Europäisches Patentamt
European Patent Office
Office européen des brevets

(11) EP 2 865 683 B1

(12) **EUROPEAN PATENT SPECIFICATION**

(45) Date of publication and mention of the grant of the patent:
**10.05.2017 Bulletin 2017/19**

(51) Int Cl.:
***C07F 5/02*** *(2006.01)*

(21) Application number: **13190441.9**

(22) Date of filing: **28.10.2013**

(54) **COMPOUNDS FOR PREPARING 4-(10B)BORONO-L-PHENYLALANINE**

VERBINDUNG ZUR HERSTELLUNG VON 4-(10B)BORONO-L-PHENYLALANIN

COMPOSE POUR LA PREPARATION DE 4-(10B)BORONO-L-PHENYLALANINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.04.2015 Bulletin 2015/18**

(73) Proprietor: **Taiwan Biotech Co., Ltd.**
**Taoyuan City**
**Tao Yuan Hsien (TW)**

(72) Inventors:
- **Sheu, Kuen-Wang**
  **Taoyuan City, Taoyuan Hsien (TW)**
- **Huang, Shu-Fen**
  **Taoyuan City, Taoyuan Hsien (TW)**
- **Shaw, Chia-Cheng**
  **Taoyuan City, Taoyuan Hsien (TW)**

(74) Representative: **Viering, Jentschura & Partner mbB**
**Patent- und Rechtsanwälte**
**Kennedydamm 55 / Roßstrasse**
**40476 Düsseldorf (DE)**

(56) References cited:

- **HATTORI, YOSHIHIDE ET AL: "Synthesis and evaluation as MRI probe of the trifluoromethylated p-boronophenylalanine and its alcohol derivative", BIOORGANIC & MEDICINAL CHEMISTRY , 15(5), 2198-2205 CODEN: BMECEP; ISSN: 0968-0896, 2007, XP002717601, DOI: 10.1016/J.BMC.2006.12.043**
- **HATTORI, YOSHIHIDE ET AL: "Study on the compounds containing 19F and 10B atoms in a single molecule for the application to MRI and BNCT", BIOORGANIC & MEDICINAL CHEMISTRY , 14(10), 3258-3262 CODEN: BMECEP; ISSN: 0968-0896, 2006, XP002717602, DOI: 10.1016/J.BMC.2005.10.062**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 865 683 B1

## Description

1. Field of the Invention

The present invention relates to a compound for preparing 4-($^{10}$B)borono-L-phenylalanine (L-$^{10}$BPA), particularly to a compound for preparing L-$^{10}$BPA with high isotopic purity and high optical purity.

2. Description of the Prior Arts

4-Borono-L-phenylalanine (L-BPA) is an important boronated compound known to be useful for treatment of cancer through boron neutron capture therapy (BNCT). Furthermore, $^{10}$B contained in L-BPA is known as the critical factor accumulated in tumor cells and subsequently irradiated with thermal neutron. Thus $^{10}$B renders L-BPA a treatment of cancer through boron neutron capture therapy (BNCT). However, natural boron exists as 19.9% of $^{10}$B isotope and 80.1% of $^{11}$B isotope. Therefore, many researchers have been developing synthetic processes and compounds suitable for producing $^{10}$B-enriched L-BPA.

Nevertheless, most conventional synthetic processes and compounds are not applicable for producing 4-($^{10}$B)borono-1-phenylalanine (L-$^{10}$BPA) but only applicable for producing 4-borono-L-phenylalanine (L-BPA). For example, U.S. Pat. No.6,031,127 discloses a process and an intermediate for preparing 4-borono-L-phenylalanine (L-BPA), wherein the intermediate is of formula (A):

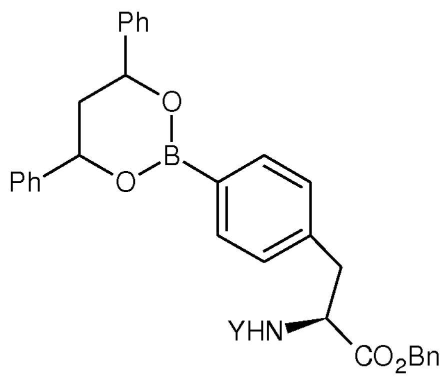

formula (A).

According to the disclosure, the boron source for producing the intermediate is bis(pinacolato)diboron and 4,4',6,6'-tetraphenyl-2,2'-bi(1,3,2,-dioxaborinane), which
is not commercially available and is hardly prepared from reacting diboron with propanediols. Therefore, such disclosed preparation is difficult and time-consuming.

Bioorganic & Medicinal Chemistry, 15 (2007) 2198-2205, discloses racemix mixture of 4-(borono-$^{10}$B)-*N*-[(1,1-dimethylethoxy)carbonyl]-2-(trifluoromeehyl)-L-phenylalanine used for the preparation of 4-($^{10}$B) borono-L-phenylalanine derivatives. Bioorganic & Medicinal Chemistry, 14 (2006) 3258-3262 also discloses racemix mixture of $N^{\alpha}$-*tert*-Butoxycarbonyl- β-[4-($^{10}$B)borono-2,6-difluorophenyl]alanine. Both of them are not enantiomerically pure, thus cannot be used to treat cancer through BNCT.To overcome the shortcomings, the present invention provides a compound for preparing 4-($^{10}$B)borono-L-phenylalanine to mitigate or obviate the aforementioned problems.

Given that the aforesaid drawbacks of the prior art such as difficulties of preparing L-$^{10}$BPA, needs for hydrogenation to provide 4-borono-L-phenylalanine, and thus inapplicability for producing $^{10}$B-enriched L-BPA, one objective of the present invention is to provide a compound for preparing 4-($^{10}$B)borono-L-phenylalanine in a facile method without tedious hydrogenation. Accordingly, the compound of the present invention is applicable for preparing 4-($^{10}$B)borono-L-phenylalanine and the obtained 4-($^{10}$B)borono-L- phenylalanine has high isotopic purity and high optical purity.

To achieve the aforementioned objective, the compound for preparing 4-($^{10}$B)borono-L-phenylalanine in accordance with the present invention is of formula (I):

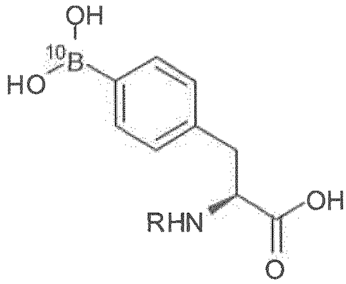

formula (I);

wherein R group represents a protection group and is selected from the group consisting of: *tert*-butoxycarbonyl (Boc) group, trityl (Trt) group, 3,5-dimethoxyphenylisopropoxycarbonyl (Ddz) group, 2-(4-Biphenyl)isopropoxycarbonyl (Bpoc) group, and 2-nitrophenylsulfenyl (Nps) group, and the compound has a $^{10}$B purity higher than or equal to 98 %.

The present invention provides a novel compound for preparing 4-($^{10}$B)borono-L-phenylalanine, particularly to a compound that is easy to be prepared such as from commercially available starting materials, and the compound of the present invention is with high isotopic purity, i.e., $^{10}$B purity, and high optical purity. Furthermore, the compound in accordance with the present invention provides 4-($^{10}$B)borono-L-phenylalanine by undergoing simple deprotection step such as an acid deprotection step, and the obtained 4-($^{10}$B)borono-L-phenylalanine is with high isotopic purity and high optical purity. Accordingly, the compound is applicable for preparing 4-($^{10}$B)borono-L-phenylalanine.

Preferably, the compound has an enantiomeric excess higher than or equal to 99%.

Preferably, the R group is tert-butoxycarbonyl (t-Boc) group.

Other objectives, advantages and novel features of the invention will become more apparent from the following detailed description when taken in conjunction with the accompanying drawings.

The present invention provides solutions to solve the problems of the conventional processes for preparing 4-($^{10}$B)borono-L-phenylalanine. A compound for preparing 4-($^{10}$B)borono-L-phenylalanine from (S)-N-Boc-4-iodophenylalanine is provided as a preferred embodiment for illustrating, but not limiting, the scope of the present invention.

For a better understanding about the technical features of the present invention and its effect, and for implements in accordance with the disclosures of the specification, preferred embodiment, details are further shown as follows.

**Embodiment 1**

**Preparation of (S)-N-Boc-4-($^{10}$B) boronophenylalanine of formula (a) from (S)-N-Boc-4-iodophenylalanine of formula (b)**

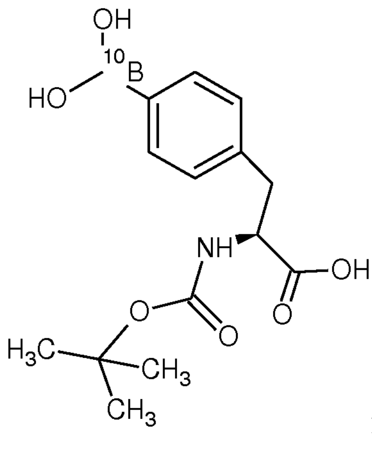

formula (a);

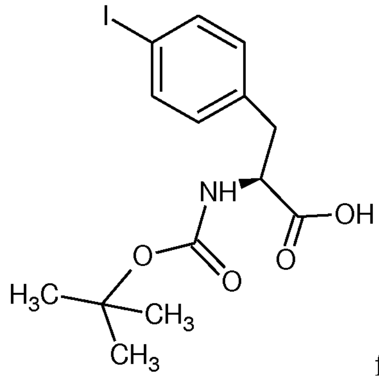

formula (b)

Set up a 3L, three-necked flask equipped with a mechanical stirrer, a thermometer, and a nitrogen inlet adaptor capped with a rubber septum. Charge the flask with 2-methyltetrahydrofuran (750 mL), followed by (S)-N-Boc-4-iodophenylalanine (50.0 g, 100% pure, 128 mmol), stirred to form a solution, and added tributyl $^{10}B$ borate (99% of $^{10}B$ purity, 106 mL, 90.1 g, 393 mmol) to form a mixed solution. The mixed solution was cooled to a temperature ranging from -76°C to -85°C, and n-butyllithium (1.6 M in hexanes, 375 ml, 600 mmol) was added dropwise to the mixed solution over 3 hours to form a reaction mixture. After the addition, the reaction mixture was stirred for an additional 0.5 hour at -80 C. HPLC analysis of a quenched sample of the reaction mixture showed the amount of the starting material (S)-N-Boc-4-iodophenylalanine was less than 0.5 %. The reaction mixture was quenched slowly with 900 mL of cold water over 15 to 20 minutes, then allowed to warm to a temperature ranging from 5°C to 10°C. The resulted mixture was filtered to remove insoluble solid, and 100 mL of water was adopted for transfer and rinse. The obtained filtrate was transferred to a separating funnel to separate the layers, and the basic lower aqueous layer was separated to obtain a first aqueous layer. The first aqueous layer was extracted with isobutyl alcohol and then separated from the isobutyl alcohol to obtain a second aqueous layer.

The pH value of the second aqueous layer was adjusted to 3 to 4 by using 37 % hydrochloric acid at a temperature ranging from 20°C to 25°C, the product (S)-N-Boc-4-($^{10}B$) boronophenylalanine started to precipitate during this period. The second aqueous layer mixture was stirred for 30 minutes, then the pH value of the second aqueous layer mixture was further adjusted to 3.0 and then the second aqueous layer mixture was stirred for another 2 hours. The second aqueous layer mixture was filtered to obtain solid (S)-N-Boc-4-($^{10}B$) boronophenylalanine, which was then washed twice with water and dried in a vacuum oven at 50°C for a minimum of 4 hours to an LOD of less than 0.5 % to afford 25.8 g of (S)-N-Boc-4-($^{10}B$) boronophenylalanine as white solid, which was 99.6% $^{10}B$-pure determined by HPLC. The yield was 65.1 %.

The melting point, specific rotation, $^{1}H$ NMR data, $^{13}C$ NMR data, IR data and MS data of the obtained (S)-N-Boc-4-($^{10}B$) boronophenylalanine are as follows.

Melting point: 150°C (decomp.);

$[\alpha]_D^{25}$:+14°(c= 0.5, MeOH) ;

$^{1}H$ NMR:(500 MHz, DMSO-$d_6$): $\delta$ 8.0 (s, 2H), 7.7 (d, J = 7.7 Hz, 2H), 7.2 (d, J = 7.6 Hz, 2H), 7.0 (d, J = 8.4 Hz, 2H), 4.1 (m, 1H), 3.0 (dd, J = 13.8, 4.5 Hz, 1H), 2.8 (dd, J = 13.7, 10.3 Hz, 1H), 1.3 (s, 9H);

$^{13}C$ NMR (125 MHz, DMSO-$d_6$) $\delta$ 173.63, 155.48, 139.96, 134.06, 131.94, 128.18, 78.13, 55.06, 36.53, 28.19;

IR (KBr) $\nu_{max}$: 3331, 2979, 1717, 1689, 1537, 1399, 1372, 1365, 1285, 1165, 1045 $cm^{-1}$; and

HRMS (ESI): calculated for $C_{14}H_{20}{}^{10}BNO_6$ $[M-H]^-$ 307.1420, found 307.1333.

**Preparation of 4-($^{10}$B)borono-L-phenylalanine (L-($^{10}$B) BPA)from (S)-N-Boc-4-($^{10}$B)boronophenylalanine**

A suspension of (S)-N-Boc-4-($^{10}B$) boronophenylalanine (20.5g, 99.6 % $^{10}B$-pure, 66.2 mmol) in a mixture of acetone (122 ml) and water (14 ml) was stirred at room temperature and added with hydrochloric acid (37 %, 13.9 14 ml) to form an acidic mixture, the acidic mixture was stirred at 55 °C for 1.5 to 2 hours. HPLC analysis of the acidic mixture showed the completion of the reaction. The temperature of the acidic mixture was cooled to room temperature, and the pH value of the acidic mixture was adjusted to 1.5 by using sodium hydroxide aqueous solution, 4-($^{10}B$)borono-L-phenylalanine started to precipitate during this period, and the acidic mixture was stirred for 50 min. The pH value of the acidic mixture was readjusted to 6.2 by using sodium hydroxide aqueous solution, and the mixture was stirred for a minimum of 25 minutes at room temperature. The acidic mixture was filtered to obtain solid 4-($^{10}B$)borono-L-phenylalanine. The solid 4-($^{10}B$)borono-L-phenylalanine was washed with 50 % aqueous acetone, followed by an acetone rinse,

dried in a vacuum oven at 80 °C for a minimum of 6 hours to constant weight to afford 13.3 g (95.2 % yield) of 4-($^{10}$B)borono-L-phenylalanine with 99.9 % purity as white crystals, and was analyzed by chiral HPLC, indicating the ratio of L to D isomers to be 100 to 0 (100 % enantiometric excess).

The melting point, specific rotation, $^{1}$H NMR data, $^{13}$C NMR data, IR data, ICP-MS data and HRMS data of the obtained L-($^{10}$B) BPA are as follows.

Melting point: 275 to 280 °C (decomp.);
$[\alpha]_{D}^{25}$:-5.4° (c=0.5, 1M HCl);
$^{1}$H NMR (500 MHz, $D_2O$, $CF_3COOD$):δ 7.2 (d, J = 8.0 Hz, 2H), 6.8 (d, J = 8.0 Hz, 2H), 3.9 (dd, J = 7.8, 5.7 Hz, 1H), 2.8 (dd, J = 14.6, 5.6 Hz, 1H), 2.7 (dd, J = 14.6, 7.9 Hz, 1H);
$^{13}$C NMR: (125 MHz, $D_2O$, $CF_3COOD$):δ 171.80, 137.31, 135.16, 132.37, 129.65, 54.64, 36.32;
IR(KBr) $\nu_{max}$: 3585, 3148, 3038, 2923, 1636, 1610, 1507, 1410, 1398, 1345, 1085, 716 $cm^{-1}$.
ICP-MS measurements for $^{10}$B content is higher than 99.4 (w/w %), wherein $^{10}$B is compared to $^{11}$B; and
HRMS (ESI): calculated for $C_9H_{13}{}^{10}BNO_4$, $[M+H]^+$ 209.0974, found 209.0970.

Even though numerous characteristics and advantages of the present invention have been set forth in the foregoing description, together with details of the structure and features of the invention, the disclosure is illustrative only.

## Claims

1. A compound for preparing 4-($^{10}$B)borono-L-phenylalanine, **characterized in that** the compound is represented by the following formula (I) :

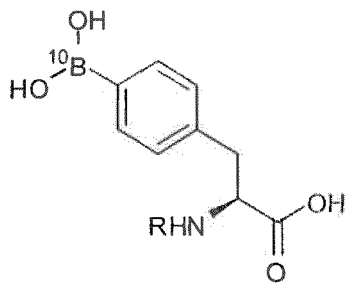

formula (I);

wherein R group is selected from the group consisting of: *tert*-butoxycarbonyl (t-Boc) group, trityl (Trt) group, 3,5-dimethoxyphenylisopropoxycarbonyl (Ddz) group, 2-(4-Biphenyl)isopropoxycarbonyl (Bpoc) group, and 2-nitrophenylsulfenyl (Nps) group, and the compound has a $^{10}$B purity higher than or equal to 98 %,
wherein the compound has an enantiomeric excess higher than or equal to 99%.

2. The compound according to claim 1, wherein the R group is *tert*-butoxycarbonyl (t-Boc) group.

## Patentansprüche

1. Eine Verbindung zur Herstellung von 4-($^{10}$B)Borono-L-phenylalanin, **gekennzeichnet dadurch, dass** die Verbindung dargestellt ist durch die folgende Formel (I):

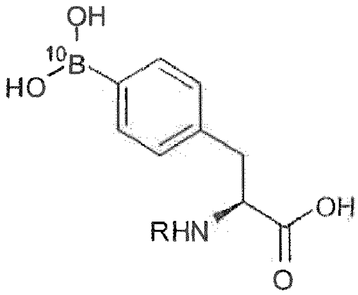

Formel (I),

wobei die R-Gruppe ausgewählt ist aus der Gruppe bestehend aus: *test*-Butoxycarbonyl (t-Boc) -Gruppe, Trityl (Trt) -Gruppe, 3,5-Dimethoxyphenylisopropoxycarbonyl (Ddz) -Gruppe, 2-(4-Biphenyl)isopropoxycarbonyl (Bpoc) -Gruppe und 2-Nitrophenylsulfenyl (Nps) - Gruppe und die Verbindung eine $^{10}B$-Reinheit größer als oder gleich 98 % hat, wobei die Verbindung einen Enantiomerenüberschuss größer als oder gleich 99 % hat.

2. Die Verbindung gemäß Anspruch 1, wobei die R-Gruppe *tert*-Butoxycarbonyl (t-Boc) -Gruppe ist.

**Revendications**

1. Composé pour la préparation de la 4-($^{10}B$)borono-L-phénylalanine, **caractérisé en ce que** le composé est représenté par la formule (I) suivante :

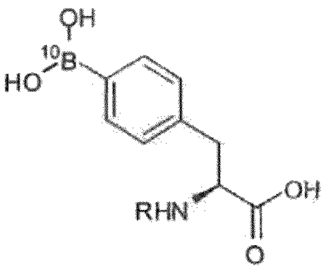

formule (I) ;

dans laquelle le groupe R est choisi dans le groupe constitué par : un groupe *tert*-butoxycarbonyle (t-Boc), un groupe trityle (Trt), un groupe 3,5-diméthoxyphénylisopropoxycarbonyle (Ddz), un groupe 2-(4-biphényl)isopropoxycarbonyle (Bpoc) et un groupe 2-nitrophénylsulfényle (Nps), et le composé a une pureté en $^{10}B$ supérieure ou égale à 98 %, le composé ayant un excès énantiomérique supérieur ou égal à 99 %.

2. Composé selon la revendication 1, dans lequel le groupe R est un groupe *tert*-butoxycarbonyle (t-Boc).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6031127 A

### Non-patent literature cited in the description

- *Bioorganic & Medicinal Chemistry,* 2007, vol. 15, 2198-2205
- *Bioorganic & Medicinal Chemistry,* 2006, vol. 14, 3258-3262